# EUROPEAN PATENT APPLICATION

(11) **EP 1 814 041 A1**
(43) Date of publication of application: **01.08.2007**
(21) Application number: 07100869.2
(22) Date of filing: 22.01.2007
(51) Int. Cl.: G06F 13/42

(54) **Data transfer apparatus, information recording and reproducing apparatus, and data transfer method**

(30) Priority: 31.01.2006 JP 2006022338
(71) Applicant: KABUSHIKI KAISHA TOSHIBA, Tokyo 105-8001 (JP)
(72) Inventor: Morio, Minako, Minato-ku Tokyo 105-8001 (JP)
(74) Representative: Henkel, Feiler & Hänzel

(57) **Abstract**

A data transfer apparatus that performs burst transfer includes a buffer memory that temporarily stores data sent from a sending apparatus, and a control unit that controls data transfer to and from the sending apparatus. When an amount of free space in the buffer memory is equal to or less than a predetermined threshold value, the control unit sends a stop request to stop the data transfer to the sending apparatus.

## Description

### BACKGROUND

### 1. Field

The present invention relates to data transfer apparatuses, information recording and reproducing apparatuses, and data transfer methods, and in particular, relates to a data transfer apparatus, an information recording and reproducing apparatus, and a data transfer method for performing burst transfer.

### 2. Description of the Related Art

High-capacity and high-speed data communications are necessary for recent optical disk drive units, HDD units, or the like. A communication standard for implementing high-capacity and high-speed data communications is, for example, the ATAPI standard.

In the ATAPI standard, the PIO (Programmed 10) mode in which a processor controls data read and write and the DMA mode in which a DMA controller controls data transfer are provided, as disclosed in, for example, JP-A 2004-199668. The DMA mode includes a first transfer mode called the Multiword DMA mode and a second transfer mode called the Ultra DMA mode for enabling high-speed transfer.

In data transfer in the DMA mode, data transfer is performed independent of a CPU, thereby enabling high-speed transfer. Moreover, high-speed data transfer can be achieved by performing what is called burst transfer, in which a set of data is transferred successively by specifying an address to which data is transferred, for example, just once.

Accordingly, in many optical disk drive units, HDD units, and the like that read and write image data, a large amount of data, and the like, data transfer is performed by burst transfer.

In general, when data is received by burst transfer, a relatively small capacity buffer memory is provided in a receiving apparatus, and received data is temporarily stored in the buffer memory. For example, when data to be written to an optical disk is transferred from a personal computer that is an apparatus on the host side to an optical disk drive unit, a buffer memory may be provided in the optical disk drive unit.

During burst transfer of data, when the buffer memory is full, the receiving apparatus sends a transmission stop request to the sending apparatus to suspend or stop burst transfer.

However, a predetermined time lag occurs between the time when the transmission stop request is delivered to the sending apparatus and the time when data transfer is actually stopped. Thus, for example, data (hereinafter called delayed data) that is sent during the time lag may overflow the buffer memory or overwrite data that has been already received, so that the received data may be lost.

To prevent such data loss, in known methods, for example, a reserve buffer memory is provided, or a reserve area is provided in a part of the buffer memory to store the delayed data in the reserve buffer memory or the reserve area.

However, since the reserve buffer memory or the reserve area in the buffer memory is not used in an ordinary case, this arrangement is not necessarily preferable from the viewpoint of the utilization efficiency of hardware resources.

Moreover, the time lag between the time when the transmission stop request is sent and the time when data transfer is actually stopped in the receiving apparatus depends on the apparatus (the sending apparatus) on the host side. For example, when the apparatus on the host side is a personal computer, a TV receiver, or the like, the time lag varies with the hardware configuration, the type of software, and the like. Thus, the amount of delayed data also varies with the type of the apparatus on the host side.

Consequently, a problem arises with an apparatus (for example, an optical disk drive unit) on the receiving side that is expected to be connected to a plurality of apparatuses on the host side in that the capacity of the reserve buffer memory or the reserve area in the buffer memory for storing delayed data cannot be fixed in advance. In this case, when the capacity of the reserve buffer memory or the reserve area in the buffer memory is fixed, the maximum amount of expected delayed data needs to be set as the capacity. Thus, the utilization efficiency of the buffer memory is further decreased.

### SUMMARY OF THE INVENTION

In view of the aforementioned problems, it is an object of the present invention to provide a data transfer apparatus, an information recording and reproducing apparatus, and a data transfer method in which the utilization efficiency of a data receiving buffer memory at the time of burst transfer can be improved, and the possibility that received data is lost at the time of burst transfer can be prevented independent of the type of a sending apparatus.

To solve the aforementioned problems, a data transfer apparatus according to a first aspect of the present invention that performs burst transfer includes a buffer memory that temporarily stores data sent from a sending apparatus, and a control unit that controls data transfer to and from the sending apparatus. When an amount of free space in the buffer memory is equal to or less than a predetermined threshold value, the control unit sends a stop request to stop the data transfer to the sending apparatus.

To solve the aforementioned problems, an information recording and reproducing apparatus according to a second aspect of the present invention that is connected to a host apparatus includes a data transfer unit that performs burst transfer to and from the host apparatus, a modulation unit that modulates data received by the data transfer unit from the host apparatus and converts the modulated data to signals to be written to an optical disk, an optical pickup that records data on the optical disk using the signals to be written and reads reproduced signals from the optical disk, and a demodulation unit that demodulates the reproduced signals output from the optical pickup. The data transfer unit includes a buffer memory that temporarily stores data sent from the host apparatus, and a control unit that controls data transfer to and from the host apparatus. When an amount of free space in the buffer memory is equal to or less than a predetermined threshold value, the control unit sends a stop request to stop the data transfer to the host apparatus.

To solve the aforementioned problems, a data transfer method according to a third aspect of the present invention for performing burst transfer includes a storing step of temporarily storing data sent from a sending apparatus in a buffer memory, and a control step of controlling data transfer to and from the sending apparatus. In the control step, when an amount of free space in the buffer memory is equal to or less than a predetermined threshold value, a stop request is sent to stop the data transfer to the sending apparatus.

In the data transfer apparatus, the information recording and reproducing apparatus, and the data transfer method according to the present invention, the utilization efficiency of a data receiving buffer memory at the time of burst transfer can be improved, and the possibility that received data is lost at the time of burst transfer can be prevented independent of the type of a sending apparatus.

### BRIEF DESCRIPTION OF THE DRAWINGS

The accompanying drawings, which are incorporated in and constitute a part of the specification, illustrate embodiments of the invention, and together with the general description given above and the detailed description of the embodiments given below, serve to explain the principles of the invention.
Fig. 1 is a block diagram showing an exemplary system configuration of an information recording and reproducing apparatus according to an embodiment of the present invention;
Fig. 2 is a block diagram showing an exemplary configuration of a data transfer apparatus (a data transfer unit) according to a first embodiment of the present invention;
Figs. 3A to 3C are illustrations showing an exemplary flow control in a known data transfer method;
Figs. 4A to 4C are illustrations showing the flow control in a data transfer method according to an embodiment of the present invention;
Figs. 5A to 5C show a first exemplary method for automatically setting a threshold value;
Figs. 6A to 6C show a second exemplary method for automatically setting a threshold value; and
Fig. 7 is a block diagram showing an exemplary configuration of a data transfer apparatus (a data transfer unit) according to a second embodiment of the present invention.

### DETAILED DESCRIPTION

Data transfer apparatuses, information recording and reproducing apparatuses, and data transfer methods according to embodiments of the present invention will now be described with reference to the attached drawings.

### (1) Configuration and Operation of Information Recording and Reproducing Apparatus

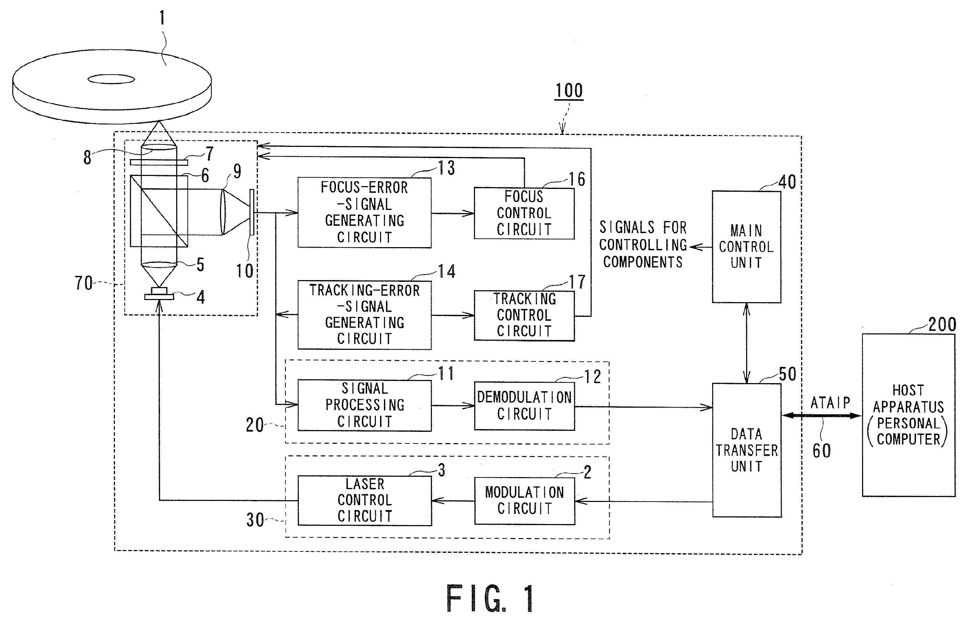

Fig. 1 is a block diagram showing an exemplary system configuration of an information recording and reproducing apparatus 100 according to an embodiment of the present invention.

The information recording and reproducing apparatus 100 includes a modulation circuit 2, a laser control circuit 3, a laser 4, a collimator lens 5, a polarizing beam splitter (hereinafter called PBS) 6, a quarter-wave plate 7, an objective lens 8, a condenser lens 9, a photodetector array 10, a signal processing circuit 11, a demodulation circuit 12, a focus-error-signal generating circuit 13, a tracking-error-signal generating circuit 14, a focus control circuit 16, a tracking control circuit 17, a main control unit 40, and a data transfer unit 50.

The laser 4, the collimator lens 5, the PBS 6, the quarter-wave plate 7, the objective lens 8, the condenser lens 9, and the photodetector array 10 constitute an optical pickup 70.

Moreover, the signal processing circuit 11 and the demodulation circuit 12 constitute a reproducing unit 20, and the modulation circuit 2 and the laser control circuit 3 constitute a recording unit 30.

The main control unit 40 performs overall control of the information recording and reproducing apparatus 100 and includes, for example, a microprocessor.

The data transfer unit 50 performs data transfer between the information recording and reproducing apparatus 100 and a host apparatus 200 (for example, a personal computer or a TV receiver) that is connected to the information recording and reproducing apparatus 100. The data transfer unit 50 is configured so that a transfer method called burst transfer is enabled. In the data transfer unit 50, transfer of a large amount of data, for example, image data, is enabled by transferring a large amount of data all at once without individually performing addressing.

Various types of data transfer method in which burst transfer is enabled exist. For example, in data transfer based on the ATAPI standard, burst transfer modes called the Multiword DMA mode, the Ultra DMA mode, and the like are defined. In many cases, these transfer modes are used in data transfer by an optical disk drive unit (the information recording and reproducing apparatus 100).

Recording and reproducing operations of the information recording and reproducing apparatus 100 having the aforementioned configuration will now be described. The recording operation will first be described.

The main control unit 40 controls recording of data. The modulation circuit 2 modulates data (data symbols) to be recorded that is sent from the host apparatus 200 via the data transfer unit 50 into a predetermined series of channel bits. The laser control circuit 3 converts the series of channels bits corresponding to the data to be recorded to a laser driving waveform. The laser 4 is pulsed by the laser control circuit 3 to record data corresponding to a desired series of bits on an optical disk 1. A light beam for recording data emitted from the laser 4 is collimated by the collimator lens 5 into parallel light that enters the PBS 6 and passes through the PBS 6. The beam having passed through the PBS 6 passes through the quarter-wave plate 7 and is focused by the objective lens 8 on a data recording surface of the optical disk 1. The focused beam is maintained through the focus control by the focus control circuit 16 and the tracking control by the tracking control circuit 17 so that an optimal minute spot can be obtained on the data recording surface.

The operation of the information recording and reproducing apparatus 100 reproducing data will now be described. The main control unit 40 controls reproducing of data. The laser 4 emits a light beam for reproducing data according to an instruction to reproduce data from the main control unit 40. The light beam for reproducing data emitted from the laser 4 is collimated by the collimator lens 5 into parallel light that enters the PBS 6 and passes through the PBS 6. The light beam having passed through the PBS 6 passes through the quarter-wave plate 7 and is focused by the objective lens 8 on the data recording surface of the optical disk 1. The focused beam is maintained through the focus control by the focus control circuit 16 and the tracking control by the tracking control circuit 17 so that an optimal minute spot can be obtained on the data recording surface. In this situation, the light beam for reproducing data emitted on the optical disk 1 is reflected by a reflective film or a reflective recording film in the data recording surface. The reflected light passes through the objective lens 8 in the reverse direction and is again collimated into parallel light. The reflected light passes through the quarter-wave plate 7. The reflected light has a light component polarized perpendicular to the incident light and is reflected by the PBS 6. The beam reflected by the PBS 6 is converted by the condenser lens 9 to convergent light that enters the photodetector array 10. The photodetector array 10 includes, for example, four photodetectors. The pencil of light having entered the photodetector array 10 is subjected to photoelectric conversion to be converted to electrical signals and amplified. The amplified signals are equalized and digitized by the signal processing circuit 11 to be sent to the demodulation circuit 12. The digitized signals are subjected to demodulation corresponding to a predetermined modulation scheme in the demodulation circuit 12, and reproduced data is output to the host apparatus 200 via the data transfer unit 50.

The focus-error-signal generating circuit 13 generates focus error signals from some of the electrical signals output from the photodetector array 10. Similarly, the tracking-error-signal generating circuit 14 generates tracking error signals from some of the electrical signals output from the photodetector array 10. The focus control circuit 16 controls focusing of a beam spot on the basis of the focus error signals. The tracking control circuit 17 control tracking of a beam spot on the basis of the tracking error signals.

The information recording and reproducing apparatus 100 records data to be written that is sent from the host apparatus 200 on the optical disk 1 and sends data reproduced from the optical disk 1 to the host apparatus 200, as described above. In this case, data is transferred between the information recording and reproducing apparatus 100 and the host apparatus 200 via the data transfer unit 50.

The configuration and operation of the data transfer unit 50 will now be described.

### (2) Configuration of Data Transfer Unit (First Embodiment)

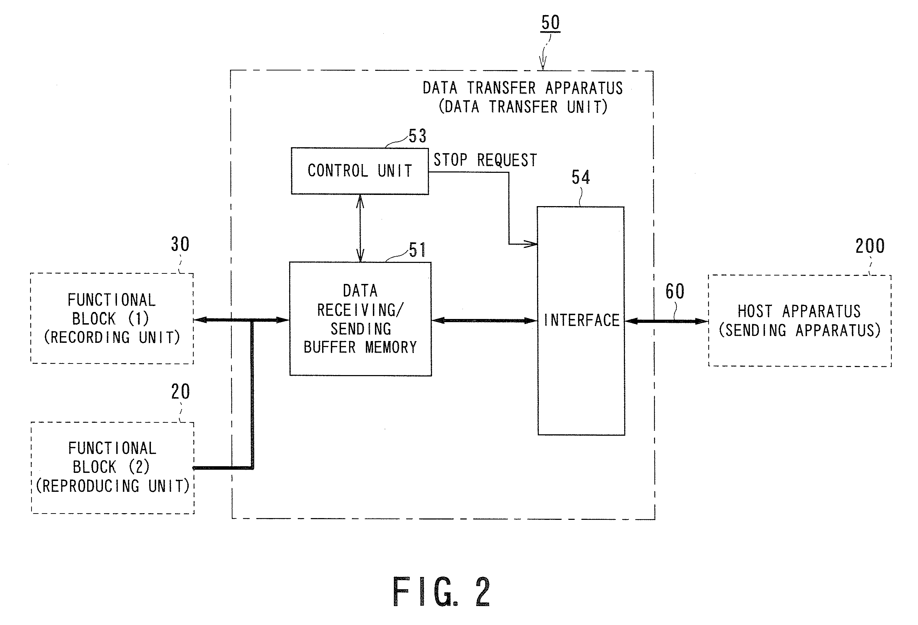

Fig. 2 is a block diagram showing an exemplary configuration of the data transfer unit 50 (a data transfer apparatus) according to a first embodiment.

The data transfer unit 50 includes a data receiving/sending buffer memory 51 (a buffer memory) that temporarily stores data sent by burst transfer from the host apparatus 200 (a sending apparatus) and data to be sent to the host apparatus 200, a control unit 53, and an interface 54. In the present invention, the function of the data receiving/sending buffer memory 51 is related to a data receiving function. Thus, in the following description, the data receiving/sending buffer memory 51 is described as the data receiving buffer memory 51.

Data that is temporarily stored in the data receiving buffer memory 51 is output to the recording unit 30 (a functional block (1)) in the information recording and reproducing apparatus 100. Data output from the reproducing unit 20 (a functional block (2)) in the information recording and reproducing apparatus 100 is temporarily stored in a data sending buffer memory 52 (not shown).

The control unit 53 monitors free space in the data receiving buffer memory 51 and requests the host apparatus 200 on the basis of the detected free space to suspend or stop data transfer.

The interface 54 converts the format of data to be transferred between the host apparatus 200 and the information recording and reproducing apparatus 100 to a data format defined in a predetermined data transfer system 60. When the data transfer system 60 is based on the ATAPI standard, the data format is converted to a data format that conforms to the ATAPI standard.

In general, since the capacity of the data receiving buffer memory 51 is not so large, data received from the host apparatus 200 is sequentially output to the downstream side (the recording unit 30 side) to transfer the data. Thus, the flow control needs to be performed so that data sent from the host apparatus 200 does not overflow the data receiving buffer memory 51. The control unit 53 performs the flow control. The control flow will now be described.

### (3) Data Transfer Method

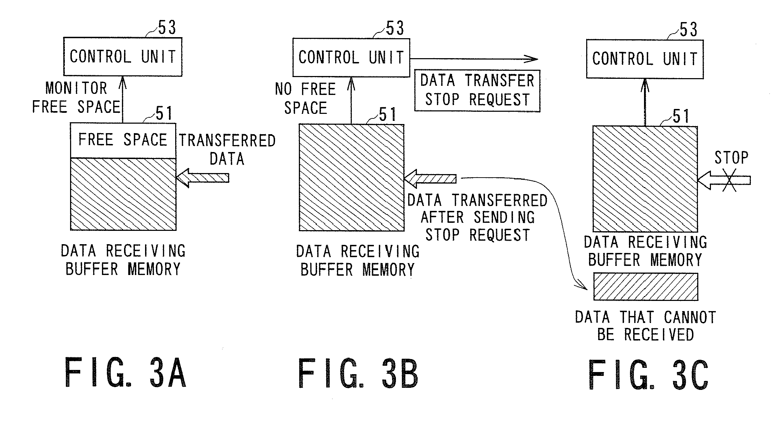

Figs. 3A to 3C are illustrations showing an exemplary known flow control for comparison with a data transfer method according to the present embodiment.

Fig. 3A shows a status in which data sent from the host apparatus 200 is being stored in the data receiving buffer memory 51. In this status, sufficient free space is available in the data receiving buffer memory 51. The control unit 53 is configured so that the control unit 53 can monitor free space in the data receiving buffer memory 51.

When the amount of data written to the data receiving buffer memory 51 exceeds the amount of data read from the data receiving buffer memory 51, free space is gradually decreased, and finally no space is available. Fig. 3B shows a status in which no free space is available. The control unit 53 sends a stop request signal to the host apparatus 200 to stop data transfer upon detecting that no free space is available.

The host apparatus 200 stops sending data to the data transfer unit 50 upon receiving the stop request signal.

However, a predetermined time lag occurs between the time when the control unit 53 sends the stop request signal to the host apparatus 200 and the time when data transfer is actually stopped in the host apparatus 200. Thus, data (delayed data) that is sent from the host apparatus 200 during the time lag may overflow the data receiving buffer memory 51, in which no free space is available, or overwrite a part of data that has been already stored in the data receiving buffer memory 51, as shown in Fig. 3C.

Consequently, a problem may occur in that a part of data sent from the host apparatus 200 is not successfully received.

To prevent such failure in receiving data, for example, a reserve data receiving buffer memory may be provided in addition to the regular data receiving buffer memory 51. However, in this arrangement, the circuitry is complicated. Moreover, this arrangement is not necessarily preferable from the viewpoint of the efficient use of the data receiving buffer memory 51.

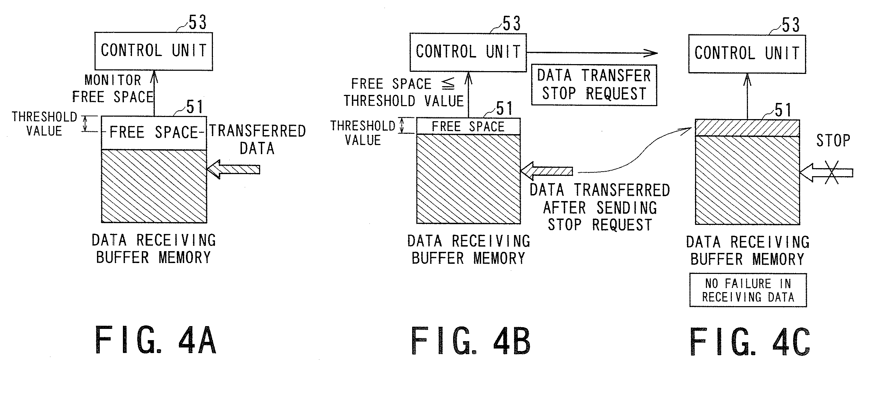

Figs. 4A to 4C are illustrations showing the data transfer method according to the present embodiment, which provides a solution to the aforementioned problem.

The data transfer method according to the present embodiment is different from known data transfer methods in that a request is submitted to stop data transfer in a status in which a relatively sufficient amount of free space is available, not a status in which no space is available in the data receiving buffer memory 51.

Specifically, the control unit 53 is configured so that the control unit 53 monitors free space and sends a request to the host apparatus 200 to stop data transfer when the free space is equal to or less than a predetermined threshold value, as shown in Figs. 4A and 4B.

Accordingly, delayed data due to the time lag of the stop request signal can be stored in as much free space as the threshold value in the data receiving buffer memory 51, thereby preventing failure in receiving data, as shown in Fig. 4C.

Moreover, in this method, a reserve data receiving buffer memory need not be provided, and the regular data receiving buffer memory 51 can be efficiently used. Thus, this method is preferable from the viewpoint of the efficient use of the data receiving buffer memory 51.

The amount of transfer data, the time lag, and the like vary with hardware, software, and the like of the host apparatus 200 connected to the information recording and reproducing apparatus 100. Thus, the amount of delayed data varies with the type of the host apparatus 200. Accordingly, it is preferable that the threshold value can be changed to reliably receive delayed data. For example, a switch for setting data may be provided in the control unit 53 so that the user can change the threshold value. Alternatively, a software update tool may be connected to the control unit 53 so that the threshold value set in the control unit 53 can be changed.

Other than the aforementioned arrangements in which the threshold value is manually set, an arrangement in which the threshold value is automatically changed may be adopted.

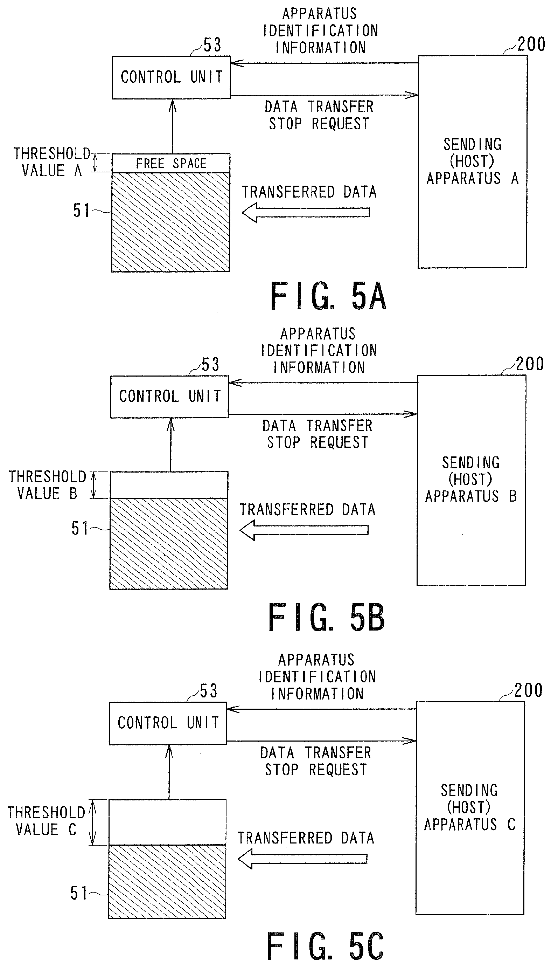

Figs. 5A to 5C show a first exemplary method for automatically changing the threshold value. In this method, the threshold value is automatically changed depending on the type of the host apparatus 200 (the sending apparatus) connected to the information recording and reproducing apparatus 100 (or the data transfer apparatus), as shown in Figs. 5A to 5C.

When apparatus identification information of communication partners can be obtained, the amount of delayed data corresponding to the host apparatus 200 connected to the information recording and reproducing apparatus 100 can be estimated for individual types of apparatus in advance.

Thus, when an arrangement is adopted, in which the amounts of estimated delayed data associated with individual types of the host apparatus 200 are stored in the form of, for example, a look-up table in the control unit 53 in advance, a threshold value that is most suitable to the host apparatus 200 connected to the information recording and reproducing apparatus 100 can be automatically set on the basis of apparatus identification information obtained from the host apparatus 200 with reference to the look-up table.

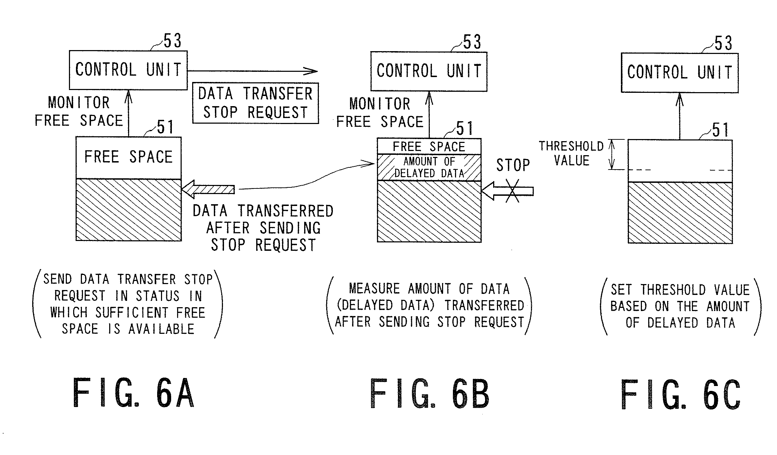

Figs. 6A to 6C show a second exemplary method for automatically changing the threshold value. This method is applicable to, for example, a case where information of the host apparatus 200 connected to the information recording and reproducing apparatus 100 cannot be obtained in advance. Specifically, in this method, the amount of delayed data corresponding to the host apparatus 200 connected to the information recording and reproducing apparatus 100 is measured, the result of measurement is learned, and a threshold value suitable to the type of the host apparatus 200 is automatically set.

Figs. 6A to 6C show an exemplary data transfer method using the second exemplary method for automatically changing the threshold value. A request is first sent from the control unit 53 to the host apparatus 200 to stop data transfer in a status in which a sufficient amount of free space is available in the data receiving buffer memory 51, as shown in Fig. 6A.

The host apparatus 200 stops data transfer after receiving the request to stop data transfer. A time lag exists between the time when the request is sent and the time when the host apparatus 200 stops data transfer. Thus, during the time lag, delayed data is stored in the data receiving buffer memory 51. Fig. 6B shows this status.

On the other hand, the control unit 53 monitors free space in the data receiving buffer memory 51, as in the first exemplary method for automatically changing the threshold value. The amount of delayed data can be measured by determining the difference between the amount of free space detected when the request to stop data transfer is sent (the status shown in Fig. 6A) and the amount of free space detected when data transfer from the host apparatus 200 is stopped (the status shown in Fig. 6B), which are obtained by the monitoring function of the control unit 53.

The control unit 53 determines the threshold value on the basis of the measured amount of delayed data. In this case, the control unit 53 may determine the threshold value by adding a predetermined margin to the measured amount of delayed data. After the threshold value is determined, the amount of free space in the data receiving buffer memory 51 is compared with the threshold value to perform the flow control, as in the process shown in Figs. 4A to 4C.

In the second exemplary method for automatically changing the threshold value, even when information of the host apparatus 200 cannot be obtained in advance, a threshold value suitable to the host apparatus 200 can be automatically set.

### (4) Second Embodiment

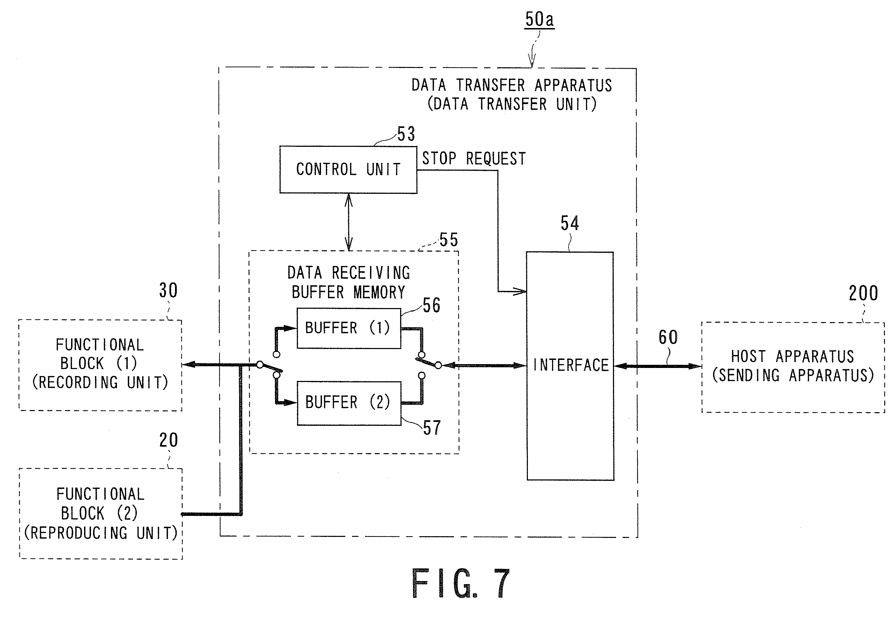

Fig. 7 is a block diagram showing an exemplary configuration of a data transfer unit 50a (a data transfer apparatus) according to a second embodiment.

The second embodiment is different from the first embodiment in that a data receiving buffer memory 55 (although actually a data receiving/sending buffer memory 55, called the data receiving buffer memory 55, as in the first embodiment) includes a plurality of buffer memories. In the data receiving buffer memory 55 having such a configuration, one of the plurality of buffer memories is used to receive data from the host apparatus 200, and data that has been already received in the other one of the plurality of buffer memories is output to the subsequent stage (the recording unit 30 side).

A typical pattern of this arrangement is implemented via a double buffer system that includes two buffer memories. Fig. 7 shows a case where the double buffer system is adopted as the data receiving buffer memory 55.

While data is being received from the host apparatus 200 using a buffer (1) 56, data is output from a buffer (2) 57 to the recording unit 30. When the buffer (1) 56 is full, the positions of switches on the input and output sides are changed so that data stored in the buffer (1) 56 is output to the recording unit 30, and data is received from the host apparatus 200 using the buffer (2) 57. These operations are alternately repeated.

In the double buffer system, when free space is available in one of the buffer memories, failure in receiving data from the host apparatus 200 can be prevented by changing the usage of the one of the buffer memories so that the one of the buffer memories is used to receive data. However, when both of the buffer memories are full, failure in receiving data occurs. Thus, a request needs to be sent to the host apparatus 200 to stop data transfer. At this time, failure in receiving delayed data due to the aforementioned time lag occurs.

To solve this problem, in the data transfer method according to the second embodiment, when no free space is available in a first buffer memory (corresponding to the buffer (2) 57 in the case shown in Fig. 7) other than a second buffer memory (corresponding to the buffer (1) 56 in the case shown in Fig. 7) that is receiving data and when free space in the second buffer memory is equal to or less than a predetermined threshold value, a request is sent to the host apparatus 200 to stop data transfer.

In the second embodiment, the control unit 53 monitors free space in each of the buffer memories and sends a request to stop data transfer.

The threshold value may be set manually, as in the first embodiment, or automatically, as in the first or second exemplary method for automatically changing the threshold value.

The present invention is not limited to the aforementioned embodiments and may be embodied with the components being changed without departing from the gist. Moreover, various embodiments of the invention can be made by combining appropriate ones of the components disclosed in each of the aforementioned embodiments. For example, some of the components disclosed in each of the aforementioned embodiments may be omitted. Moreover, the components in the different embodiments may be appropriately combined.

## Claims

1. A data transfer apparatus that performs burst transfer, the data transfer apparatus comprising:
a buffer memory that temporarily stores data sent from a sending apparatus; and
a control unit that controls data transfer to and from the sending apparatus,
wherein, when an amount of free space in the buffer memory is equal to or less than a predetermined threshold value, the control unit sends a stop request to stop the data transfer to the sending apparatus.

2. The data transfer apparatus according to Claim 1, wherein the buffer memory includes a plurality of buffer memories that alternately receive data sent from the sending apparatus and store the data, and
when no free space is available in a first buffer memory other than a second buffer memory that is being receiving the data and when an amount of free space in the second buffer memory is equal to or less than a predetermined threshold value, the control unit sends the stop request to stop the data transfer to the sending apparatus.

3. The data transfer apparatus according to Claim 1, wherein the control unit is configured so that the threshold value can be changed.

4. The data transfer apparatus according to Claim 1, wherein the control unit sets the threshold value for predetermined types of the sending apparatus.

5. The data transfer apparatus according to Claim 1, wherein the control unit sets the threshold value on the basis of apparatus identification information sent from the sending apparatus.

6. The data transfer apparatus according to Claim 1, wherein the control unit monitors the amount of free space in the buffer memory and sets the threshold value so that the threshold value is suitable to the amount of free space in the buffer memory.

7. An information recording and reproducing apparatus that is connected to a host apparatus, the information recording and reproducing apparatus comprising:
a data transfer unit that performs burst transfer to and from the host apparatus;
a modulation unit that modulates data received by the data transfer unit from the host apparatus and converts the modulated data to signals to be written to an optical disk;
an optical pickup that records data on the optical disk using the signals to be written and reads reproduced signals from the optical disk; and
a demodulation unit that demodulates the reproduced signals output from the optical pickup,
wherein the data transfer unit includes:
a buffer memory that temporarily stores data sent from the host apparatus, and
a control unit that controls data transfer to and from the host apparatus, and
when an amount of free space in the buffer memory is equal to or less than a predetermined threshold value, the control unit sends a stop request to stop the data transfer to the host apparatus.

8. The information recording and reproducing apparatus according to Claim 7, wherein the buffer memory includes a plurality of buffer memories that alternately receive data sent from the host apparatus and store the data, and
when no free space is available in a first buffer memory other than a second buffer memory that is being receiving the data and when an amount of free space in the second buffer memory is equal to or less than a predetermined threshold value, the control unit sends the stop request to stop the data transfer to the host apparatus.

9. The information recording and reproducing apparatus according to Claim 7, wherein the control unit is configured so that the threshold value can be changed.

10. The information recording and reproducing apparatus according to Claim 7, wherein the control unit sets the threshold value for predetermined types of the host apparatus.

11. The information recording and reproducing apparatus according to Claim 7, wherein the control unit sets the threshold value on the basis of apparatus identification information sent from the host apparatus.

12. The information recording and reproducing apparatus according to Claim 7, wherein the control unit monitors the amount of free space in the buffer memory and sets the threshold value so that the threshold value is suitable to the amount of free space in the buffer memory.

13. A data transfer method for performing burst transfer, the data transfer method comprising:
a storing step of temporarily storing data sent from a sending apparatus in a buffer memory; and
a control step of controlling data transfer to and from the sending apparatus,
wherein, in the control step, when an amount of free space in the buffer memory is equal to or less than a predetermined threshold value, a stop request is sent to stop the data transfer to the sending apparatus.

14. The data transfer method according to Claim 13, wherein the buffer memory includes a plurality of buffer memories that alternately receive data sent from the sending apparatus and store the data, and
in the control step, when no free space is available in a first buffer memory other than a second buffer memory that is being receiving the data and when an amount of free space in the second buffer memory is equal to or less than a predetermined threshold value, the stop request is sent to stop the data transfer to the sending apparatus.

15. The data transfer method according to Claim 13, wherein, in the control step, the threshold value is set so as to be changed.

16. The data transfer method according to Claim 13, wherein, in the control step, the threshold value is set for predetermined types of the sending apparatus.

17. The data transfer method according to Claim 13, wherein, in the control step, the threshold value is set on the basis of apparatus identification information sent from the sending apparatus.

18. The data transfer method according to Claim 13, wherein, in the control step, the amount of free space in the buffer memory is monitored and the threshold value is set so as to be suitable to the amount of free space in the buffer memory.
